(19) Europäisches Patentamt

European Patent Office

Office européen des brevets

(11) **EP 1 276 602 B1**

(12) **FASCICULE DE BREVET EUROPEEN**

(45) Date de publication et mention
de la délivrance du brevet:
**05.04.2006 Bulletin 2006/14**

(21) Numéro de dépôt: **01928047.8**

(22) Date de dépôt: **25.04.2001**

(51) Int Cl.:
**B29C 70/50** *(2006.01)* **B29B 15/10** *(2006.01)*
**B29C 47/02** *(2006.01)* **E06B 3/26** *(2006.01)*

(86) Numéro de dépôt international:
**PCT/FR2001/001258**

(87) Numéro de publication internationale:
**WO 2001/081072 (01.11.2001 Gazette 2001/44)**

(54) **ELEMENT DE MENUISERIE EXTRUDE RENFORCE PAR DES FIBRES CONTINUES, PROCEDE ET DISPOSITIF**

EXTRUDIERTES, DURCH KONTINUIERLICHE FASERN VERSTÄRKTES TISCHLERBAUTEIL UND VERFAHREN UND VORRICHTUNG ZU SEINER HERSTELLUNG

EXTRUDED JOINERY WORK ELEMENT REINFORCED WITH CONTINUOUS FIBRES, METHOD AND DEVICE

(84) Etats contractants désignés:
**AT BE CH CY DE DK ES FI FR GB GR IE IT LI LU MC NL PT SE TR**
Etats d'extension désignés:
**RO**

(30) Priorité: **25.04.2000 FR 0005261**

(43) Date de publication de la demande:
**22.01.2003 Bulletin 2003/04**

(73) Titulaire: **Lapeyre**
**92400 Courbevoie (FR)**

(72) Inventeurs:
 • **BOISSONNAT, Philippe**
 **F-73230 Challes les Eaux (FR)**
 • **COOPER, Edward**
 **St-Catharines, Ontario (CA)**
 • **ZANELLA, Guy**
 **F-73160 Cognin (FR)**
 • **CAREL, Rémi**
 **F-69005 Lyon (FR)**
 • **MACQUART, Philippe**
 **F-92600 Asnières (FR)**
 • **GAY, Thierry**
 **F-71250 Cluny (FR)**

(74) Mandataire: **Muller, René**
**SAINT-GOBAIN RECHERCHE**
**39, quai Lucien Lefranc**
**93303 Aubervilliers (FR)**

(56) Documents cités:
**EP-A- 0 441 449 EP-A- 0 602 618**
**DE-A- 4 421 184 US-A- 4 492 063**
**US-A- 4 740 405**

EP 1 276 602 B1

Printed by Jouve, 75001 PARIS (FR)

## Description

La présente invention concerne des éléments de menuiserie comprenant un profilé extrudé en matière organique extrudable renforcé par au moins un ruban de renfort constitué par des filaments de verre continus et par une matière organique thermoplastique.

Les éléments de menuiserie usuels sont constitués essentiellement de bois ou de matière organique extrudable, notamment à base de matière organique thermoplastique , par exemple du polychlorure de vinyl (PVC).

Les éléments de menuiserie à base de matière organique thermoplastique sont généralement fabriqués à partir de profilés de matière organique thermoplastique découpés et assemblés pour constituer, par exemple, des montants et/ou des traverses de bâti et/ou d'ouvrants.

Les éléments de menuiserie usuels sont notamment des fenêtres ou éléments de fenêtre, tels que cadre, châssis, montants, traverses, des volets, des portes, des portails ou éléments correspondants.

Les profilés de matière organique thermoplastique utilisés sont le plus souvent creux afin d'une part d'économiser de la matière et d'autre part de créer des chambres ayant un rôle d'isolation thermique.

Un problème posé par les profilés de matière thermoplastique a trait à leur faible module élastique. En effet on peut craindre des déformations importantes des éléments de menuiserie qui les comprennent , dès que ceux-ci ont des dimensions significatives.

Pour résoudre ce problème, on utilise usuellement des barres métalliques qui sont insérées dans une chambre de profilé et permettent ainsi de rigidifier les éléments de menuiserie.

Cette technique, bien qu'ayant fait ses preuves pose néanmoins plusieurs problèmes : elle nécessite des opérations d'assemblage supplémentaire par rapport à l'assemblage direct de profilés ; elle conduit donc à des surcoûts importants liés d'une part à la matière de renfort, d'autre part à la main d'oeuvre nécessaire pour les opérations d'assemblage ; elle conduit à une augmentation significative du poids de l'élément de menuiserie ce qui gêne la manutention. Enfin, les barres métalliques qui sont insérées dans une chambre de profilé créent des ponts thermiques et la chambre où la barre métallique a été insérée ne joue plus qu'un rôle mineur d'isolation thermique; on préfère alors utiliser des profilés de forme complexe à au moins deux chambres.

Une solution pour obtenir des profilés creux, notamment de fenêtre, où des renforts métalliques ne sont pas nécessaires a été décrite dans le brevet US 4 492 063 de Schock et al. Ce document décrit un profilé de matière thermoplastique extrudé renforcé de filaments de verre continus. Ces filaments de verre sont en un premier temps liés entre eux par une résine thermoplastique ou thermoélastique pour former des joncs.

Ces joncs sont ensuite introduits dans un dispositif d'extrusion où une autre matière organique thermoplastique est introduite pour coextruder ladite matière organique thermoplastique et les joncs afin de former le profilé renforcé.

Les joncs décrits sont de formes cylindriques ou de bandes dont la largeur est plus grande que l'épaisseur.

Cette solution présente plusieurs inconvénients :

elle nécessite une étape préalable de fabrication des joncs qui sont ensuite introduits dans le dispositif d'extrusion. D'après la description le procédé correspondant est discontinu et donc onéreux car il nécessite des étapes intermédiaires, notamment de stockage et de manipulation des joncs fabriqués en un premier temps.

En outre ces joncs, dans ce document, fabriqués par imprégnation de fibres de renforcement dans un bain de résine. Cette technique conduit souvent à une répartition hétérogène des fibres dans la matière organique thermoplastique, ce qui peut nuire aux propriétés mécaniques du renfort.

La présente invention a donc pour but de fournir un élement de menuiserie renforcé comme décrit dans la revendication 1, amélioré du point de vue du renforcement obtenu et qui puisse en outre être fabriqué industriellement de façon aisée, notamment dans un procédé continu.

Ce but est obtenu selon l'invention par un procédé de fabrication, comme décrit dans la revendication 11, d'un élement de menuiserie à base de matière organique extrudable renforcée par des fibres de renforcement comprenant les étapes consistant à mettre une multiplicité de fils continus de renforcement en présence d'une matière organique thermoplastique et à conformer la matière composite, il comprend au moins les étapes suivantes :

- on rassemble de manière parallèle des fils continus à base de fibres de verre continues et d'une première matière thermoplastique et l'on forme en chauffant au moins un ruban consolidé dans lequel les fibres de renforcement sont imprégnées de la première matière thermoplastique, et

- on introduit au moins un ruban dans une filière calibrée à la section du profilé et l'on introduit simultanément au moins une deuxième matière organique extrudable fondue dans ladite filière au contact du ou des rubans, de manière à obtenir un profilé constitué d'au moins une deuxième matière organique extrudable renforcée par au moins un ruban.

On entend par matière organique extrudable, une matière organique susceptible d'être conditionnée dans un dispositif d'extrusion, notamment une matière organique thermoplastique.

Il a été observé qu'un ruban de renfort obtenu à partir de filaments continus, filaments de verre et de matière organique thermoplastique incorporée aux fils continus présente une aptitude remarquable au renforcement, que l'on peut entre autres attribuer à la structure très homogène et intègre du ruban.

Selon une caractéristique, on forme le ruban à partir de fils continus comprenant des filaments de verre et des fibres organiques de ladite première matière thermoplastique, les filaments continus de verre et de la première matière thermoplastique étant co-mêlés entre eux.

Les filaments de la matière organique thermoplastique utilisée pour constituer le ruban est un polyester, notamment polytéréphtalate d'éthylène ou de butylène. Suivant une réalisation particulièrement avantageuse la matière organique extrudable est du polychlorure de vinyle additivé ou non de plastifiant(s), charge (s), pigment(s), colorant(s).

L'association de ces deux matières permet d'obtenir un profilé renforcé aux caractéristiques mécaniques remarquables, y compris à température élevée.

Le mode de renfort selon l'invention s'applique donc avantageusement à des corps profilés en matière plastique colorée, au moins sur une partie de leur surface, qui absorbent relativement plus de chaleur que les matières claires.

Suivant une réalisation, il comprend les étapes suivantes :

- on entraîne et on rassemble de manière parallèle des fils à base d'une première matière thermoplastique et de fibres de renforcement, sous la forme d'au moins une nappe ;
- on fait pénétrer au moins une nappe dans une zone où elle est chauffée à une température atteignant au moins celle de fusion de la première matière thermoplastique sans atteindre la température de ramollissement des fibres de renforcement ;
- on fait passer au moins une nappe dans un dispositif d'imprégnation, tout en maintenant sa température à une température de malléabilité de la première matière thermoplastique, pour répartir de manière homogène la première matière thermoplastique fondue et imprégner les fibres de renforcement par celle-ci.

On réalise ainsi des éléments de menuiserie susceptibles d'assurer également une fonction.

Suivant une autre réalisation, on introduit au moins une nappe dans un premier dispositif de conformation, tout en maintenant sa température à une température de malléabilité de la première matière thermoplastique, de manière à obtenir au moins un ruban constitué par le rapprochement en contigu des fils formant une continuité transversale.

Selon les modes de réalisation, le ruban peut affecter des formes variées, notamment il consiste à dévider des bobines d'un fil continu de filaments de renforcement et de la première matière thermoplastique, et lors du rassemblement des fils sous forme de nappe, à réguler la tension des fils ou les fils sont débarrassés de toute électricité statique avant le passage de la nappe dans la zone de chauffage.

Une forme complexe permet de renforcer plusieurs parois en continuité par au moins un même ruban.

L'élément de menuiserie selon l'invention peut constituer notamment un élément de châssis de menuiserie, notamment de bâti et/ou d'ouvrant de fenêtre et/ou de volet, et/ou de porte et/ou de portail.

L'invention a d'autre part pour objet un procédé de fabrication d'un élément de menuiserie tel que décrit précédemment.

L'utilisation selon l'invention d'une matière organique thermoplastique incorporé aux fils continus de renforcement permet de fabriquer le ruban de renfort par voie sèche, de manière simplifiée par rapport à des procédés usuels.

A cet égard l'invention a pour objet un dispositif selon la revendication 20 de mise en oeuvre du procédé qui comprend :

- des moyens pour rassembler de manière parallèle des fils continus à base de fibres de verre continues et d'une première matière thermoplastique, et des moyens, notamment de chauffage, pour former au moins un ruban consolidé dans lequel les fibres de verre sont imprégnées de la première matière thermoplastique, et
- une filière calibrée à la section du profilé et des moyens pour introduire simultanément au moins un ruban et au moins une deuxième matière organique extrudable fondue dans ladite filière au contact du ou des rubans, de manière à obtenir un profilé constitué d'au moins une deuxième matière organique extrudable renforcée par au moins un ruban.

Selon l'invention, le procédé de fabrication du ruban est caractérisé en ce qu'il comprend au moins les étapes suivantes :

- on rassemble de manière parallèle des fils continus à base de fibres de verre continues et d'une première matière thermoplastique et l'on forme en chauffant au moins un ruban consolidé dans lequel les fibres de renforcement sont imprégnées de la première matière thermoplastique, et
- on introduit au moins un ruban dans une filière calibrée à la section du profilé et l'on introduit simultanément au moins une deuxième matière organique extrudable fondue dans ladite filière au contact du ou des rubans, de manière à obtenir un profilé constitué d'au moins une deuxième matière organique extrudable renforcée par au moins un ruban.

Comme on le détaillera aussi par la suite, on entend par ruban au sens de la présente description un matériau en bande, qui peut être essentiellement plate, ou affecter une forme de section plus complexe où chaque portion est assimilable à une bande.

Le ruban peut être souple, notamment susceptible d'être enroulé lorsque le ruban est sensiblement plat, ou plus ou moins rigide.

On entend d'autre part par consolidé, le fait que les fibres de renforcement sont imprégnées par la première matière thermoplastique de sorte que le ruban présente une certaine cohésion et une intégrité qui permettent de le manipuler sans endommagement.

Selon l'invention, la fabrication préliminaire d'un renfort consolidé garantit l'intégration du renfort sous la forme souhaitée et avec la géométrie souhaitée dans le profilé, et l'imprégnation par la première matière thermoplastique garantit d'autre part une véritable liaison du renfort à la ou aux deuxièmes matières extrudables qui constitue(nt) le corps du profilé.

Selon l'invention on forme le ruban à partir de fils continus comprenant des filaments de verre et des fibres organiques de ladite première matière thermoplastique, les filaments continus de verre et de matière thermoplastique étant co-mêlés entre eux. La structure intime de ces fils facilite l'imprégnation des fibres de verre par la matière thermoplastique, en particulier elle améliore l'homogénéité de l'imprégnation pour former un ruban consolidé lui-même très homogène.

Ladite première matière thermoplastique peut être choisie parmi les polyesters, notamment le polytéréphtalate d'éthylène, le polytéréphtalate de butylène.

Suivant une réalisation particulière, pour la formation du ruban :

- on entraîne et on rassemble de manière parallèle des fils à base de la première matière thermoplastique et de fibres de verre, sous la forme d'au moins une nappe ;
- on fait pénétrer au moins une nappe dans une zone où elle est chauffée à une température atteignant au moins celle de fusion de la première matière thermoplastique sans atteindre la température de ramollissement des fibres de renforcement ;
- on fait passer au moins une nappe dans un dispositif d'imprégnation, tout en maintenant sa température à une température de malléabilité de la première matière thermoplastique, pour répartir de manière homogène la première matière thermoplastique fondue et imprégner les fibres de verre par celle-ci.

Selon une autre caractéristique, on introduit au moins une nappe dans un premier dispositif de conformation, tout en maintenant sa température à une température de malléabilité de la première matière thermoplastique, de manière à obtenir au moins un ruban constitué par le rapprochement en contigu des fils formant une continuité transversale.

Selon une autre caractéristique, le procédé comprend une étape consistant à dévider des bobines d'un fil continu de filaments de verre et de matière thermoplastique, et lors du rassemblement des fils sous forme de nappe, à réguler la tension des fils.

Avantageusement, les fils sont débarrassés de toute électricité statique avant le passage de la nappe dans la zone de chauffage.

Suivant des réalisations particulières, on forme dans la première étape un ruban essentiellement plat ou au contraire conformé à un profil particulier.

Selon une caractéristique, le ruban est déformé lors de son introduction dans la filière qui joue alors le rôle d'un second dispositif de conformation.

Selon une autre caractéristique, on introduit dans la filière au moins une deuxième matière extrudable qui a été conditionnée par un dispositif d'extrusion. Une telle matière extrudable peut être notamment une polyoléfine ou du polychlorure de vinyle.

Selon une autre caractéristique, on refroidit le profilé pour fixer ses caractéristiques dimensionnelles et son aspect, et délivrer le profilé fini.

Selon une autre caractéristique, le profilé est découpé en fin de ligne de fabrication pour son stockage.

Quant au dispositif de mise en oeuvre du procédé, il est caractérisé essentiellement en ce qu'il comprend :

- des moyens pour rassembler de manière parallèle des fils continus à base de fibres de verre continues et d'une première matière thermoplastique, et des moyens notamment de chauffage pour former au moins un ruban consolidé dans lequel les fibres de verre sont imprégnées de la première matière thermoplastique, et
- une filière calibrée à la section du profilé et des moyens pour introduire simultanément au moins un ruban et au moins une deuxième matière organique extrudable fondue dans ladite filière au contact du ou des rubans, de manière à obtenir un profilé constitué d'au moins une deuxième matière organique extrudable renforcée par au moins un ruban.

Suivant une réalisation, le dispositif comprend :

- des moyens pour entraîner et des moyens pour rassembler sous forme d'au moins une nappe les fils continus constitués de filaments continus de verre et d'une première matière thermoplastique ;
- des moyens pour chauffer au moins une nappe à une température atteignant au moins celle de fusion de la première matière thermoplastique mais pas celle de ramollissement des filaments de verre ;
- un dispositif d'imprégnation d'au moins une nappe chauffée de manière à répartir de manière homogène la première matière thermoplastique fondue et permettre l'imprégnation des filaments de verre par celle-ci.

Selon une caractéristique, le dispositif comprend des moyens de chauffage constitués par des fours.

Selon une autre caractéristique, les moyens de rassemblement du dispositif consistent en un peigne dont les dents permettent un alignement parallèle des fils selon des espaces réguliers.

Selon une autre caractéristique, des moyens de régulation de tension des fils sont prévus en amont des moyens de rassemblement.

Selon une variante avantageuse, un dispositif anti-statique est prévu en amont des moyens de chauffage.

Selon une autre caractéristique, le dispositif d'imprégnation comporte trois organes qui sont disposés en triangle et entre lesquels défile la nappe, la hauteur de séparation des organes étant adaptée pour établir une pression appropriée sur la surface de la nappe. Les organes peuvent être des cylindres chauffants et tournants, ou des barreaux chauffants et fixes.

Avantageusement, chaque cylindre comporte une lame pour racler la matière thermoplastique fondue déposée sur le cylindre après passage de la nappe.

Selon une autre caractéristique, le dispositif comprend un premier dispositif de conformation d'au moins une nappe de manière à la transformer en au moins un ruban. Selon une autre caractéristique, le dispositif de conformation comprend une filière, avantageusement chauffante, et/ou des galets entre lesquels circule la nappe de fils.

Un dispositif de conformation particulier assure également le centrage de la nappe et comporte un galet inférieur et un galet supérieur décalés l'un au-dessus de l'autre et tournant en sens opposés, le galet supérieur étant de forme hyperboloïde, la nappe étant concentrée autour de l'axe central de défilement lors de son passage entre les deux galets pour délivrer un ruban présentant une association contiguë des fils les uns contre les autres.

Selon encore une autre caractéristique, le dispositif selon l'invention comprend en amont de la filière par laquelle on forme la ou les deuxièmes matières extrudables ou cette filière elle-même comprend des moyens de positionnement et/ou de conformation d'au moins un ruban pour la mise en contact avec au moins une deuxième matière extrudable.

Suivant une réalisation la filière comprend des moyens pour apporter la deuxième matière extrudable fondue au contact du ruban en y appliquant une surpression.

Selon une autre caractéristique, une extrudeuse apporte au moins une deuxième matière extrudable fondue dans ladite filière.

Selon encore une autre caractéristique, le dispositif comprend un dispositif de refroidissement du profilé, notamment par exposition à l'air ou à un fluide de refroidissement, et/ou par contact avec des organes aux surfaces froides ou refroidies, permettant de figer la ou les deuxième(s) matière(s) extrudable(s) et/ou la première matière thermoplastique et de solidariser les fils entre eux et former le profilé définitif. En particulier, le dispositif peut comprendre une calandre de refroidissement, constituée notamment de deux cylindres tournants de refroidissement qui sont disposés l'un au-dessus de l'autre et sont dépourvus de bords de guidage, la calandre conférant ainsi sa forme définitive au profilé.

Avantageusement, le dispositif peut comprendre une filière froide ou refroidie, généralement de même profil et de même dimension que la première filière recevant le ruban et la ou les deuxièmes matières thermoplastiques.

Selon une caractéristique avantageuse, le dispositif peut comprendre des moyens de projection de liquide qui permettent de refroidir le profilé en défilement.

D'autres avantages et caractéristiques vont à présent être décrits en regard des dessins sur lesquels :

- la figure 1 est une vue schématique en élévation du dispositif de fabrication d'un ruban selon l'invention ;
- les figures 2 à 6 sont des vues de profil de certaines parties du dispositif de la figure 1, respectivement, d'un dispositif de régulation de tension des fils, du dispositif tournant d'imprégnation, de deux variantes du premier dispositif de conformation et du second dispositif de conformation.
- la figure 7 représente l'évolution des propriétés mécaniques en fonction de la température d'un profilé obtenu selon l'invention.
- la figure 8 est une vue en coupe d'un élément de menuiserie selon l'invention.

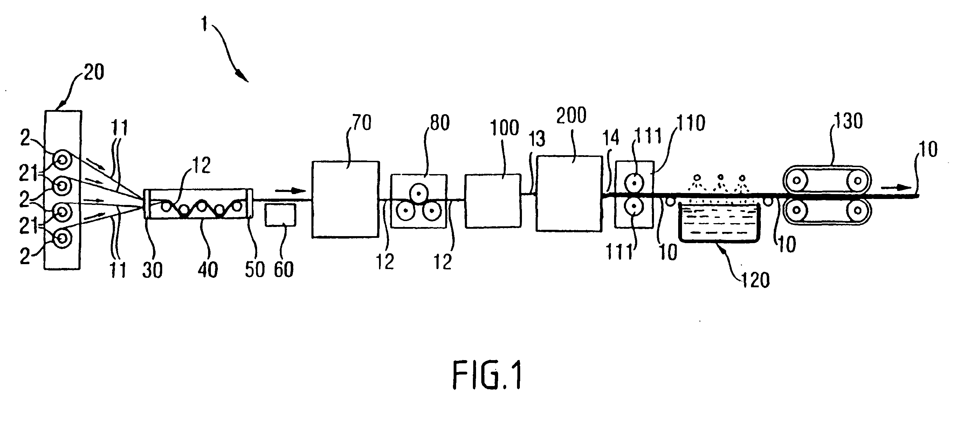

Le dispositif 1 visible à la figure 1 permet la fabrication d'un profilé 10 conforme à l'invention qui est constitué d'une part d'au moins un ruban de fils continus de renforcement agencés de manière parallèle et contiguë les uns contre les autres et solidarisés entre eux par une première matière thermoplastique et d'autre part d'au moins une seconde matière plastique en contact intime avec ledit (lesdits) ruban(s).

Chaque fil, commercialisé par la société VETROTEX sous la dénomination commerciale TWINTEX® et fabriqué selon le procédé décrit dans le brevet EP 0 599 695, est constitué par des filaments de verre et des filaments d'une matière organique thermoplastique, de type polyoléfine ou polyester, intimement mêlés entre eux.

Le dispositif de fabrication 1 comprend, sous forme d'une ligne et d'amont en aval, un cantre 20 muni de plusieurs bobines 2 constituées d'enroulement de fil 11, une plaque à oeillets 30, un dispositif de régulation de tension des fils 40, un peigne 50, un dispositif anti-électricité statique 60, un four 70, un dispositif d'imprégnation 80, un premier dispositif de conformation 100, notamment une filière, un second dispositif de conformation, notamment une filière 200, une extrudeuse 300, une calandre 110, un bac de refroidissement 120 et un banc de tirage à chenilles 130.

Le cantre 20 a pour but de dévider le fil 11 de chaque bobine 2. Il peut être du type à déroulement et se composer d'un châssis muni d'axes rotatifs horizontaux 21 qui supportent chacun une bobine 2.

En variante, on peut utiliser un cantre à dévidage, mais celui-ci induit une torsion sur le fil qui n'est pas constante allant de un tour pour 50 cm jusqu'à un tour pour 1 m, qui a pour effet de limiter l'épaisseur minimale du ruban fini, notamment en ne pouvant descendre en-dessous de 0,3 mm pour des bobines de fil de 982 tex. En outre, cette torsion peut favoriser l'emmêlement des fils en cours de défilement sur la chaîne de fabrication du ruban ce qui provoquerait des noeuds et/ou des fils 11 non parallèles et non tendus dans le ruban une fois formé.

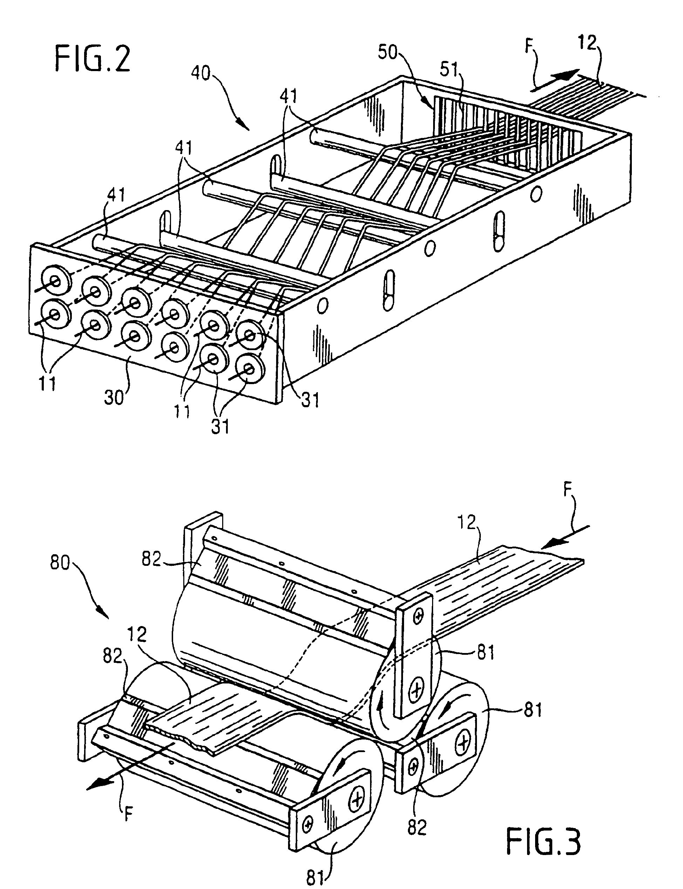

On peut par conséquent préférer l'utilisation d'un cantre à déroulement, en particulier pour réaliser une fine épaisseur de ruban (inférieure à 0,2 mm). Il s'avère cependant nécessaire dans ce cas de prévoir un dispositif de régulation, référencé 40 sur les figures 1 et 2, qui permet d'ajuster le niveau de tension global de la nappe de fils.

La plaque à oeillets 30, visible aussi à la figure 2, est située dans un plan vertical et parallèle aux axes rotatifs 21 du cantre. Elle permet de regrouper les fils 11, qui traversent chacun un oeillet 31 pour être guidés vers le dispositif de régulation de tension 40 sous un angle adapté à la tension désirée. Les oeillets 31 sont de manière connue en matériau céramique pour éviter d'endommager les fils lors de leur passage au travers de ceux-ci.

Le dispositif de régulation de tension 40 qui est illustré à la figure 2 est associé à la plaque à oeillets 30. Il comporte une série de barreaux cylindriques 41 disposés en quinconce les uns aux dessus des autres et, sur et sous lesquels cheminent les fils 11 en provenance de la plaque à oeillets 30 de manière à dessiner des sinusoïdes identiques dont l'amplitude influe sur la tension des fils. Les barreaux sont réglables en hauteur afin de pouvoir modifier l'amplitude des sinusoïdes qui, par son augmentation, impose une tension supplémentaire aux fils.

Les barreaux sont avantageusement en laiton ou en matériau céramique pour limiter les phénomènes d'électricité statique induits par le frottement des fils.

A la sortie du dispositif 40 est disposé un peigne 50 dont les dents 51 regroupent et alignent parallèlement les fils 11 selon un espace régulier pour obtenir une nappe 12 à la manière de faisceaux de fils.

Entre le peigne 50 et l'entrée du premier four 70 est implanté un dispositif électrique 60 servant à annihiler toute électricité statique dont pourraient être chargés les fils 11 de façon à éviter le foisonnement desdits fils qui pourrait sinon engendrer leur dégradation dans le four 70.

Le four 70 fonctionne par convection à air chaud. Il pourrait tout aussi bien s'agir de four à infra-rouge.

Le chauffage de la nappe 12 par son passage dans le four 70 s'effectue à une température telle qu'à sa sortie du four la nappe ait une température suffisante pour atteindre la température de fusion du thermoplastique des fils 11 pour que ce dernier, fondu, se colle et se noie dans les filaments de verre de l'ensemble de la nappe 12.

Le four 70 peut être constitué de deux fours successifs : un premier four, en amont du second par rapport au sens de défilement. Le premier four a pour fonction de chauffer la nappe 12 comme décrit ci-dessus, le second four a pour fonction de conditionner la nappe à une température inférieure adaptée à l'introduction de la nappe dans le dispositif de conformation 100.

Après le four 70 est situé un dispositif tournant d'imprégnation 80 qui aplatit la nappe 12 de façon à chasser l'air contenu entre les fils, à répartir de manière homogène sur la largeur de la nappe le thermoplastique fondu, et à garantir la totale imprégnation des filaments de verre par le thermoplastique.

Le dispositif d'imprégnation 80 est constitué de trois organes disposés en triangle entre lesquels circule la nappe 12. Dans un premier mode de réalisation, les organes peuvent être constitués par des barreaux fixes dont l'écartement est ajusté pour régler la pression nécessaire à l'imprégnation. Les barreaux peuvent être chauffants pour maintenir le thermoplastique à une température de malléabilité sans coller à la surface des barreaux. A cet effet, la surface peut être en un matériau adapté ou bien être spécifiquement traitée.

Dans une variante, visible à la figure 3, le dispositif 80 est constitué de trois cylindres 81 parallèles entre eux et disposés en triangle de façon à présenter deux cylindres inférieurs et un cylindre supérieur. Les cylindres sont chauffants et atteignent une température suffisante pour maintenir le thermoplastique de la nappe dans un état malléable.

Les cylindres 81 sont rotatifs, ceux inférieurs tournant dans le sens positif de direction de défilement F de la nappe 12, tandis que celui supérieur tourne dans le sens opposé, les vitesses de rotation étant identiques et correspondant à celle de défilement de la nappe.

Le cylindre supérieur est réglable en hauteur pour établir une pression suffisante sur la nappe 12 de façon à assurer l'imprégnation du verre par le thermoplastique.

Les cylindres 81 étant en contact avec la nappe présentent rapidement sur leur surface le dépôt d'un film de matière thermoplastique. Avantageusement, lesdits cylindres comportent chacun une lame 82 faisant office de racle par rapport à leur surface et dont le rôle est tout à la fois d'éviter la formation d'enroulements parasites des filaments de verre et d'aider à la répartition homogène du thermoplastique fondu sur la longueur du ruban. Ainsi en cas de surplus d'épaisseur du film sur chaque cylindre, ce surplus permet de compléter l'enrobage des filaments de verre qui seraient éventuellement insuffisamment revêtus.

Les lames 82 sont réglables en inclinaison de manière à optimiser leur efficacité.

En variante, dans un même but de régulation de la répartition de la matière thermoplastique, au lieu d'utiliser les lames 82, les trois cylindres sont entraînés à une vitesse de rotation légèrement inférieure à celle de défilement de la nappe. Cette solution nécessite non seulement la motorisation des cylindres 82 mais aussi la mise en place d'un mécanisme de contrôle de vitesse.

A noter qu'il serait possible d'imaginer un four dans lequel serait logé le dispositif d'imprégnation 80 apte à résister à la température du four.

A la sortie du four est placé un premier dispositif de conformation 100 qui peut comprendre une filière de section calibrée appropriée pour conformer la nappe à la forme et aux dimensions souhaitées pour le ruban. Suivant différents modes de réalisation, l'orifice de la filière peut être sensiblement rectangulaire pour former un ruban plat, qui pourra éventuellement être déformé par la suite, ou de forme plus complexe pour former un ruban conformé suivant un profil particulier. L'orifice de la filière est avantageusement réalisé dans une pièce amovible qui se fixe sur un support fixe, ce qui permet un nettoyage et un remplacement aisés

La filière est avantageusement chauffante pour maintenir les surfaces de conformation à une température voisine du point de fusion ou de la température de malléabilité du thermoplastique de la nappe. On utilise par exemple un chauffage par une ou plusieurs ceintures chauffantes à résistance électrique enserrant une ou plusieurs zones de la filière.

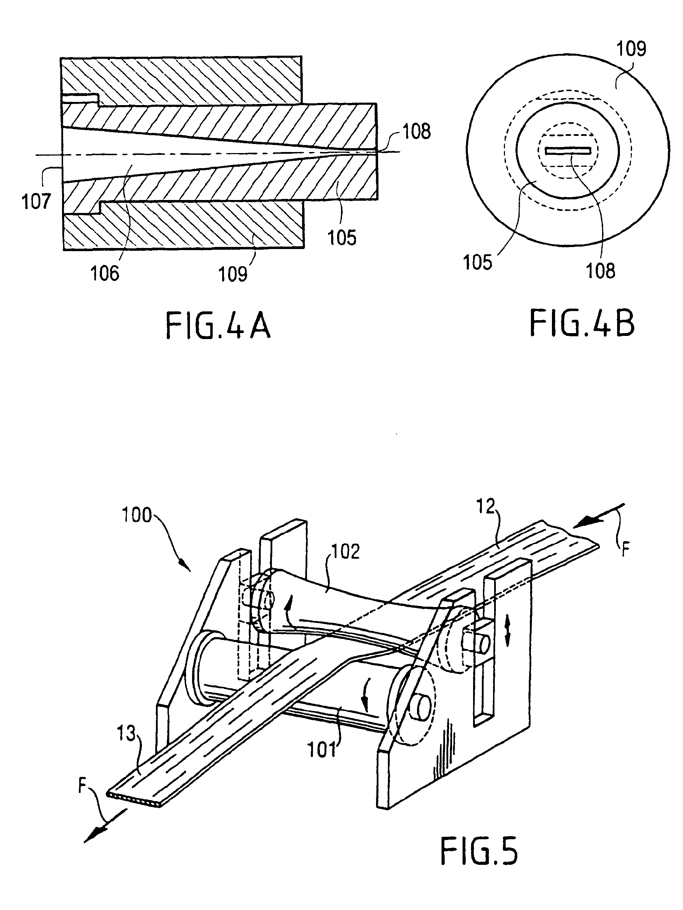

La figure 4 représente un premier dispositif de conformation 100 constitué d'une filière. Cette dernière comprend un corps sensiblement cylindrique 105 comprenant une ouverture large 107 en amont, par laquelle est introduite la nappe 12, une cavité 106 dont la largeur est constante et dont la hauteur décroît jusqu'à l'épaisseur désirée du ruban à former, et en aval, une sortie 108 par laquelle sort le ruban 13 formé. Une partie du corps sensiblement cylindrique 105 est disposé dans un corps de chauffe 109. Le chauffage peut notamment être assuré par des résistances électriques sous la forme de ceintures chauffantes disposées autour du corps de chauffe 109 et possiblement autour de la partie du corps sensiblement cylindrique 105 qui dépasse du corps de chauffe 109.

En variante, le dispositif de conformation 100 peut comprendre des galets de formes diverses entre lesquels circule la nappe de fils. Bien qu'il soit également possible de fabriquer un ruban conformé selon cette variante, elle est plus particulièrement destinée à la réalisation d'un ruban plat.

Ainsi, un dispositif selon cette variante comprend, tel qu'illustré à la figure 5, un galet inférieur cylindrique 101 et un galet supérieur hyperboloïde 102 légèrement décalé en amont par rapport à la verticale du galet inférieur, tous deux tournants et chauffants pour maintenir à la température de malléabilité le thermoplastique de la nappe 12.

Le dispositif 100 a pour but de transformer la nappe 12 en un ruban 13 d'épaisseur constante constitué par le rapprochement en contigu des fils 11 pour réaliser une continuité transversale dudit ruban. Ainsi, le dispositif 100 concentre la nappe autour de l'axe central de la ligne pour diminuer sa largeur qui avait été augmentée lors de son passage dans le dispositif d'imprégnation 80, et la recentre par rapport à l'axe central de la ligne de fabrication pour guider le ruban convenablement en aval vers la calandre 110.

Le rassemblement et le guidage vers le centre est obtenu par la forme hyperboloïde du galet supérieur 102 qui, par son réglage en hauteur, permet par ailleurs d'appliquer une légère pression sur la surface supérieure de la nappe pour la concentrer.

La rotation en sens opposé des galets 101 et 102 évite d'une part, l'essorage de la matière thermoplastique, et d'autre part, son accumulation qui pourrait nuire à la régularité de sa répartition et par conséquent, à l'épaisseur du ruban.

Après le premier dispositif de conformation 100 est situé un second dispositif de conformation 200, visible à la figure 5. Le dispositif de conformation 200 est une filière alimentée d'une part par au moins un ruban 13 obtenu comme décrit ci-dessus, et d'autre part par un moyen 300, notamment une extrudeuse connue de l'homme du métier, qui apporte sous pression au moins une seconde matière organique extrudable fondue 30.

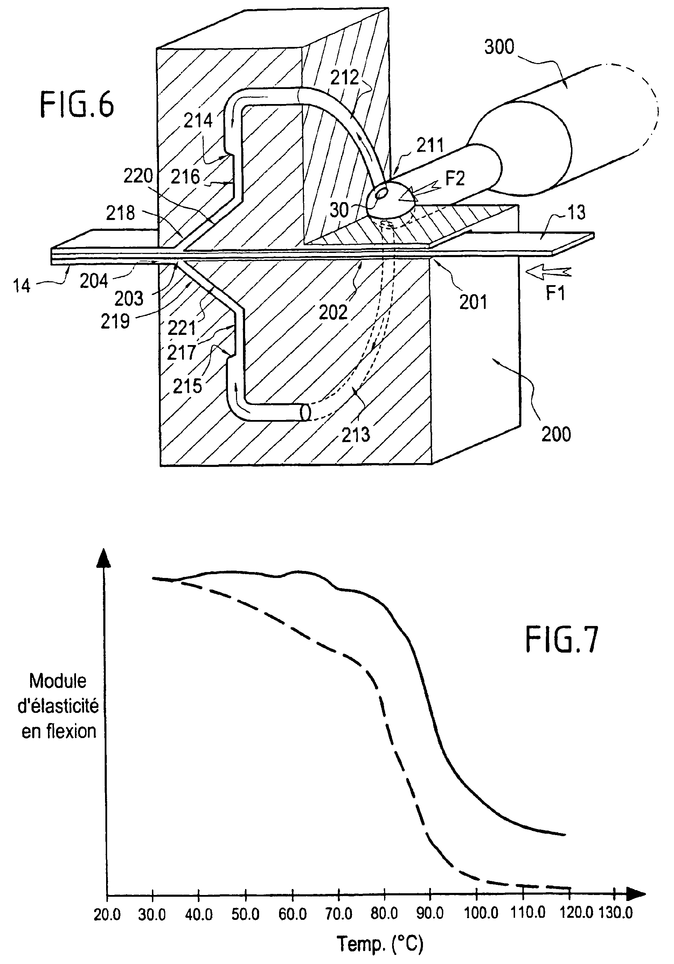

La figure 6 représente une coupe partiellement éclatée du dispositif de conformation 200, représenté en perspective. La coupe est effectuée perpendiculairement au plan du ruban 13, et au sens du défilement du ruban 13. La partie éclatée permet de visualiser les moyens 300 pour apporter la matière extrudable 30 et le parcours de cette dernière dans le dispositif de conformation 200.

Le dispositif de conformation 200 est constitué d'une entrée 201 pour un ruban 13, introduit dans le sens de la flèche F1, d'une entrée 211 pour de la seconde matière extrudable 30 introduite dans le sens de la flèche F2.

Le ruban 13 défile dans une cavité 202 pour aboutir dans une cavité 203.

La matière extrudable 30 parcourt des canaux 212, 213 situés à l'écart de la cavité 202. Ces canaux sont destinés à alimenter en matière extrudable 30 la cavité 203 par plusieurs côtés.

Les canaux 212, 213 comportent des rétrécissements 214, 216 pour déboucher dans des canaux 216, 217 à section inférieure à celle des canaux 212, 213. On peut ainsi créer des surpressions dans la matière extrudable fondue 30.

Les canaux 216, 217 débouchent dans la cavité 203.

Cette dernière cavité 203 est bordée de parois 218, 219 constitués de plans inclinés qui aboutissent à une sortie 204. On obtient alors un système convergent qui permet d'amener la matière extrudable 30 au contact du ruban 13. La surpression P appliquée permet de créer un contact intime entre la matière extrudable 30 et le ruban 13, tout en évitant un refoulement vers l'amont de la matière thermoplastique.

La cavité 203 peut être dessinée de manière à ce que de la matière extrudable 30 converge de manière homogène dans toutes les directions autour du ruban 13. Pour obtenir cette fonction on peut notamment utiliser un guide tronconique comportant des parois inclinées 219, 220 situé autour de la cavité 202.

On peut ainsi diriger le flux de matière extrudable 30 afin de positionner un ruban 13 dans une configuration désirée et obtenir ainsi un profilé 14 où le renfort est placé dans une géométrie définie en fonction des applications choisies.

Il faut noter que la position du dispositif d'extrusion 300 représentée ici en tête d'équerre n'est nullement limitative : en effet il peut être situé en toute position autour de l'axe de parcours du ruban 13.

En outre, on envisage également un dispositif de mise en oeuvre du procédé où l'extrudeuse est disposée suivant la direction de défilement du profilé. En particulier, on envisage que l'extrudeuse 300 délivre de la matière extrudable 30 dans l'axe de défilement du profilé 14, 10 et où au moins un ruban 13 est apporté dans au moins une direction quelconque et converge dans l'axe de défilement du profilé 14, 10 après avoir pénétré dans le dispositif de conformation 200.

Il est ainsi possible d'obtenir des profilés 10 renforcés par plusieurs rubans 13.

Un dispositif 110, est située en aval du dispositif 200 qui guide le profilé 14, dont le refroidissement commence dès la sortie de la filière au contact de l'air ambiant, vers des moyens de refroidissement spécifiques dans le but de fixer les caractéristiques dimensionnelles du profilé et de lui donner son aspect définitif afin de disposer d'un profilé fini 10. La dispositif 110 refroidit le profilé 14 pour figer la seconde matière extrudable en lui conférant un aspect surfacique lisse.

Ce dispositif 110 peut être une calandre constituée de cylindres, éventuellement refroidis par une circulation interne d'eau. De façon plus avantageuse, ce sera une filière froide de même profil et de même dimension que la filière chaude 100, sa température pouvant être comprise entre la température ambiante et 200 °C par exemple.

Le refroidissement final du ruban est réalisé au moyen du bac de refroidissement 120, notamment à eau, situé après la calandre 110 et dans lequel passe le profilé 14 lors de son défilement. Le bac 120 peut comprendre des moyens de projection du liquide de refroidissement sur le profilé 10.

Au cours de tous ses refroidissements, toute la masse de la seconde matière extrudable fige, ainsi que le premier thermoplastique pour obtenir la solidarisation des fils entre eux et la liaison des renforts fibreux à la matrice de seconde matière extrudable.

Postérieurement au bac de refroidissement est implanté un banc de tirage à chenilles 130 qui constitue de manière connue un moyen d'entraînement des fils et du ruban, exerçant un effort de traction tout au long de la ligne. Il impose la vitesse de dévidage et de défilement de la nappe puis du ruban.

Enfin, le dispositif 1 de fabrication peut comprendre en terminaison de ligne une scie destinée à découper le profilé de manière à faciliter son stockage.

La mise en oeuvre du procédé peut s'effectuer de la manière suivante.

La mise en route du procédé s'effectue d'abord en tirant et en amenant manuellement chaque fil 11 des bobines 2 jusqu'au banc de tirage 130 où chaque fil est alors maintenu pincé, l'ensemble des fils passant au travers des divers dispositifs décrits plus haut. Il s'agit dans cet exemple d'application de 35 rovings de fil composite comêlé verre-polyester de marque *Twintex®* dont le titre global 860 tex comprend 65% de verre en poids. Le polyester, notamment du polytéréphtalate d'éthylène, constitue alors la première matière thermoplastique.

Le four 70 ainsi que les éléments chauffants du dispositif 1 sont montés en température pour atteindre une température nettement supérieure à la température de fusion du polyester, soit 254°C dans le cas du polytéréphtalate d'éthylène.

Les autres moyens fonctionnent aux températures suivantes :

-   organes du dispositif imprégnation 80 : 290°C ;
-   galets du dispositif de conformation 100 selon le mode de réalisation illustré sur la figure 4 : 270°C à 300°C ;
-   dispositif de conformation 100 selon le mode de réalisation avec une filière : 310°C;
-   second dispositif de conformation 200 : 190 à 200°C dans la zone où s'effectue le contact intime entre le ruban 13 et la seconde matière extrudable 30.

Le banc de tirage 130 est mis en fonctionnement, le dévidage des bobines 2 commence.

Les fils 11 passent au travers des oeillets 31, puis à cheval des barreaux dans le dispositif 40, et sont rassemblés au travers des dents du peigne 50 pour former en sortie la nappe 12 de fils parallèles.

La nappe 12 rencontre alors le dispositif 60 qui élimine toute électricité statique.

Elle rentre ensuite dans le four 70 de façon que la première matière thermoplastique atteigne sa température de fusion. En sortie, elle passe entre les cylindres chauffants du dispositif 80 qui permettent de la laminer en chassant l'air, et de répartir uniformément la première matière thermoplastique qui enrobe ainsi les filaments de verre. Remarquons que la quantité de matière thermoplastique n'est pas à doser puisque celle-ci est directement intégrée à la matière première du ruban par son comêlage avec les filaments de verre. La température de la nappe atteint après le passage dans ce dispositif 80 une température de 260 à 270°C.

Puis la nappe 12 défile entre les cylindres ou à travers la filière du premier dispositif de conformation 100 pour la transformer en un ruban 13, conformé en resserrant les fils les uns contre les autres et en les disposant de manière contiguë. Après conformation, le ruban présente une température de 270 à 280°C.

Puis un ruban 13 pénètre dans le second dispositif de conformation 200 après un parcours qui le refroidit quelque peu, notamment jusqu'à 210°C environ.

Ledit dispositif 200 est alimenté simultanément par une seconde matière extrudable 30.

Le contact entre le ruban 13 et la seconde matière extrudable 30 s'effectue à environ 190°C à 200°C.

Le profilé 14 passe ensuite entre les cylindres de la calandre froide 110 qui fixe sa forme définitive en figeant la surface de la seconde matière extrudable et en solidarisant les fils entre eux. On obtient le profilé 10 de l'invention d'épaisseur constante et d'aspect lisse. Le profilé présente une température de 100°C en sortie de calandre.

Pour faciliter et accélérer le refroidissement de l'ensemble du profilé 10, celui-ci passe dans du liquide de refroidissement retenu par le bac 120 et devient en sortie, sa température étant de 30°C, un produit solide et suffisamment rigide pour être découpé, pour des facilités de stockage, de transport et d'utilisation.

On obtient alors des profilés composites présentant une liaison intime entre le ruban de renfort et la matrice constituée par la seconde matière extrudable. Quand la surpression P appliquée est suffisante le profilé obtenu est dépourvu de porosité.

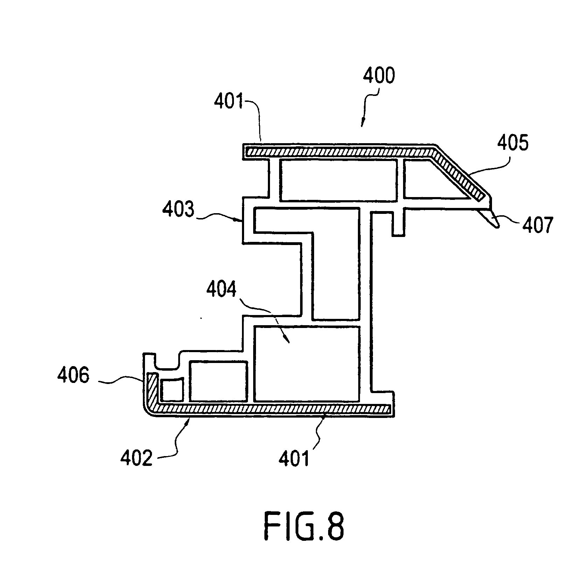

La figure 8 illustre un élément de cadre de fenêtre obtenu selon l'invention.

Cet élément comprend un profilé 400 dont la section définit deux parois 402 essentiellement parallèles, destinées à former les surfaces extérieure et intérieure de la fenêtre. Les deux parois 402 sont séparées par un ensemble de chambres 403, 404 qui confèrent des propriétés d'isolation thermique au profilé.

Les parois 402 sont chacune renforcée par un ruban 401 qui est incorporé dans la matière plastique du profilé sur les deux portions parallèles des parois 402 ainsi que sur les portions 405, 406 qui forment un retour à angle respectivement obtus et droit.

Cet configuration peut être obtenue soit en conformant le ruban avec une section angulaire ou en L dès le poste de conformation 100 ou seulement lors de son introduction dans la filière 200.

Le procédé selon l'invention permet de fabriquer le profilé 400 de façon continue avec un dispositif tel que celui de la figure 1, avec éventuellement une modification consistant à prévoir l'alimentation de la filière 200 avec une autre matière extrudable, notamment un élastomère, pour former la lèvre d'étanchéité 407 simultanément avec le corps du profilé 400 par coextrusion de matières plastiques.

Pour illustrer l'intérêt des produits obtenus par le procédé décrit ci-dessus des essais de fabrication de profilés ont été entrepris et des échantillons de ces profilés ont fait l'objet d'essais mécaniques.

Les profilés fabriqués pour ces essais sont pleins.

Les échantillons testés ont une section rectangulaire de 30 mm de large et de 7,5 mm d'épaisseur.

Le ruban de renfort mesure environ 18 mm de largeur et 1 mm d'épaisseur. Une face large du ruban est situé à 1 mm d'une première face large de l'échantillon. Le ruban est donc recouvert de seconde matière extrudable par une épaisseur d'environ 5,5 mm d'un côté et par 1 mm de l'autre côté.

Le ruban est centré sur la largeur du profilé, donc entouré sur sa largeur d'environ 11 mm par la seconde matière extrudable.

La seconde matière extrudable est un polychlorure de vinyle (PVC).

Des essais mécaniques de résistance en flexion 3 points sur échantillon de section 30x7,5 comme indiqué précédemment avec distance entre appuis égale à 20 fois l'épaisseur de l'échantillon réalisés à température ambiante selon la norme ISO 14125 à température ambiante ont permis de déterminer le module élastique du profilé :

on obtient :

$$E_{profilé} = 3600 \pm 200 \text{ MPa}.$$

En comparaison, un profilé de PVC seul de mêmes dimensions a un module élastique de : $E_{pvc} = 2650$ MPa.

L'effet du ruban de renfort conduit à une augmentation du module élastique de l'ordre de 40 %.

Il est possible d'optimiser l'augmentation de module du profilé décrit en déplaçant l'axe du ruban de renfort par rapport à l'axe de la fibre neutre du profilé.

Une seconde série d'essais effectués sur des échantillons de profilé de mêmes dimensions dans lesquels le ruban de renfort a été éloigné de l'axe de la fibre neutre du profilé a ainsi permis d'obtenir les résultats suivants :

$E_{profilé} = 4800 \pm 100$ MPa, soit une augmentation du module élastique d'environ 80%.

Une troisième série d'échantillons a été réalisée avec un profilé série d'échantillons a été réalisée avec un profilé d'épaisseur double du précédent soit 15 mm, où deux rubans de renfort de 1 mm d'épaisseur et de 18 mm de largeur ont été insérés.

Les faces larges externes des deux rubans sont situés à 1 mm du bord large du profilé. On a donc environ 11 mm de seconde matière plastique entre les bords internes des deux rubans.

On obtient alors pour ce profilé un module élastique : $E_{profilé à deux rubans} = 7350 \pm 200$ MPa.

L'augmentation du module élastique est presque d'un facteur 3 par rapport au PVC seul.

troisième série d'échantillons a été réalisée avec un profilé d'épaisseur double du précédent soit 15 mm, où deux rubans de renfort de 1 mm d'épaisseur et de 18 mm de largeur ont été insérés.

Les faces larges externes des deux rubans sont situés à 1 mm du bord large du profilé. On a donc environ 11 mm de seconde matière plastique entre les bords internes des deux rubans.

On obtient alors pour ce profilé un module élastique : $E_{profilé\ à\ deux\ rubans}$ = 7350 ± 200 MPa.

L'augmentation du module élastique est presque d'un facteur 3 par rapport au PVC seul.

D'autres essais mécaniques de résistance en flexion 3 points ont été réalisés avec une quatrième série d'échantillons en faisant varier la température de l'échantillon.

Les échantillons testés ont une section rectangulaire de 13 mm de large et 3,7 mm d'épaisseur, le ruban de renfort d'une épaisseur d'environ 1 mm étant toujours situé à environ 1 mm d'une première face de l'échantillon. La distance entre appuis est alors de 48 mm.

Les essais mécaniques menés dans une plage de températures de 30 à 120°C ont permis de déterminer le module élastique du profilé à chacune des températures d'essai. La variation du module est représentée sur la figure 7 par la courbe en trait plein pour un profilé renforcé selon l'invention et par un trait interrompu pour un profilé non renforcé. La figure 7 présente les variations relatives de module, c'est pourquoi les deux courbes partent du même point d'origine à 30°C.

Compte tenu de la géométrie relativement peu favorable du profilé avec un renfort situé relativement près de l'axe de la fibre neutre du profilé, la différence de module à température ambiante est toutefois relativement moins marquée que dans les séries d'essais précédentes.

Pour l'échantillon de PVC non renforcé, on observe une diminution très rapide du module élastique lorsque la température augmente avec une transition vitreuse pour une température de l'ordre de 100°C. A titre indicatif, le module est de l'ordre de 1000 MPa à 80°C et de l'ordre de quelques MPa à 120°C.

Pour l'échantillon de PVC renforcé, on observe une certaine stabilité du module élastique lorsque la température augmente, du moins jusqu'à 70-80°C, avec une chute moins rapide pour les températures supérieures, avec en outre une transition vitreuse pour une température de l'ordre de 90°C. A titre indicatif, le module est supérieur à 2000 MPa à 80°C et de l'ordre de 500 MPa à 120°C.

On démontre ainsi qu'on obtient un excellent transfert de charge entre la matrice thermoplastique et le renfort à température ambiante comme à température élevée.

Sans vouloir être lié par cette explication, on présume que c'est l'excellente cohésion apportée par les différentes étapes du procédé, et notamment la constitution d'un ruban à partir de fibres de verre et de fibres organiques, qui confère ces propriétés remarquables.

Les modes de réalisation décrits précédemment ne sont nullement limitatifs, et l'on peut envisager notamment de fabriquer un profilé dans lequel le ruban de renfort adopte d'autres configurations.

**Revendications**

1. Elément de menuiserie comprenant au moins, un profilé (400) extrudé en une deuxième matière organique extrudable renforcé par au moins un ruban (401) de renfort constitué par des filaments de verre continus et par une première matière organique thermoplastique **caractérisé en ce que** le ruban (401) est constitué à partir de fils continus (11) à base de filaments de verre continus et de la première matière organique thermoplastique sensiblement parallèles entre eux, ladite première matière organique étant à base de polyester, notamment du polytéréphtalate d'éthylène ou de butylène, les filaments étant comêlés entre-eux.

2. Elément de menuiserie selon la revendication 1 **caractérisé en ce que** le ruban (401) est constitué de filaments de verre imprégnés intimement par la première matière organique thermoplastique desdits filaments continus de ladite première matière organique thermoplastique.

3. Elément de menuiserie selon l'une quelconque des revendications précédentes, **caractérisé en ce que** la deuxième matière organique extrudable extrudée est du polychlorure de vinyle.

4. Elément de menuiserie selon l'une quelconque des revendications précédentes, **caractérisé en ce que** au moins une partie de la surface du profilé est une matière organique extrudable colorée.

5. Elément de menuiserie selon l'une quelconque des revendications précédentes, **caractérisé en ce que** le profilé (400) comprend au moins une chambre (404) et au moins une paroi (402) renforcée par au moins un ruban (401).

6. Elément de menuiserie selon l'une des revendications 1 à 4. **caractérisé en ce que** le profilé (400) est plein.

7. Elément de menuiserie selon l'une quelconque des revendications précédentes, **caractérisé en ce que** la section du ruban (401) est sensiblement de forme rectangulaire allongée.

8. Elément de menuiserie selon l'une des revendications 1 à 6, **caractérisé en ce que** la section du ruban (401) une forme complexe, notamment un L, un T, un U, un I, un chevron.

9. Elément de menuiserie selon la revendication 8, **ca-**

**ractérisé en ce que** plusieurs parois (402) sont renforcées par au moins un même ruban (401).

10. Elément de châssis de menuiserie, notamment de bâti et/ou d'ouvrant de fenêtre et/ou de volet, et/ou de porte, et/ou de portail comprenant un élément de menuiserie selon l'une quelconque des revendications précédentes.

11. Procédé de fabrication d'un élément de menuiserie selon l'une quelconque des revendications 1 à 10, **caractérisé en ce qu'il** comprend au moins les étapes suivantes, effectuées en séquence continue :

    - on rassemble de manière parallèle des fils continus (11) à base de fibres de verre continues et d'une première matière thermoplastique et l'on forme en chauffant au moins un ruban (13) consolidé dans lequel les fibres de verre sont Imprégnées de la première matière thermoplastique, et
    - on introduit au moins un ruban (13) dans une filière (200) calibrée à la section du profilé et l'on introduit simultanément au moins une deuxième matière organique extrudable (30) fondue dans ladite filière (200) au contact du ou des rubans, de manière à obtenir un profilé (10) constitué d'au moins une deuxième matière organique extrudable renforcée par au moins un ruban.

12. Procédé selon la revendication 11, **caractérisé en ce que** l'on forme le ruban (13) à partir de fils continus (11) comprenant des fils de verre et des fibres organiques de ladite première matière thermoplastique.

13. Procédé selon la revendication 11 ou 12, **caractérisé en ce que** les fils (11) qu'on rassemble consistent en des filaments continus de verre et des filaments continus de la première matière thermoplastique co-mêlés entre eux.

14. Procédé selon l'une quelconque des revendications 11 à 13, **caractérisé en ce qu'**il comprend les étapes suivantes :

    - on entraîne et on rassemble de manière parallèle des fils (11) à base d'une première matière thermoplastique et de fibres de verre, sous la forme d'au moins une nappe (12) ;
    - on fait pénétrer au moins une nappe (12) dans une zone où elle est chauffée à une température atteignant au moins celle de fusion de la première matière thermoplastique sans atteindre la température de ramollissement des fibres de renforcement ;
    - on fait passer au moins une nappe (12) dans un dispositif d'imprégnation (80), tout en maintenant sa température à une température de malléabilité de la première matière thermoplastique, pour répartir de manière homogène lapremière matière thermoplastique fondue et imprégner les fibres de verre par celle-ci.

15. Procédé selon l'une quelconque des revendications 11 à 14, **caractérisé en ce que** l'on introduit au moins une nappe (12) dans un premier dispositif de conformation (100), tout en maintenant sa température à une température de malléabilité de la première matière thermoplastique, de manière à obtenir au moins un ruban (13) constitué par le rapprochement en contigu des fils (11) formant une continuité transversale.

16. Procédé selon l'une quelconque des revendications 11 à 15, **caractérisé en ce qu'**il consiste à dévider des bobines d'un fil continu de filaments de verre et de la première matière thermoplastique, et lors du rassemblement des fils sous forme de nappe, à réguler la tension des fils.

17. Procédé selon l'une quelconque des revendications 11 à 16. **caractérisé en ce que** les fils (11) sont débarrassés de toute électricité statique avant le passage de la nappe (12) dans la zone de chauffage.

18. Procédé selon l'une quelconque des revendications précédentes, **caractérisé en ce que** l'on refroidit le profilé (14) en sortie de la filière (200) pour fixer ses caractéristiques dimensionnelles et son aspect pour délivrer ledit profilé final (10).

19. Procédé selon l'une quelconque des revendications précédentes **caractérisé en ce que** le profilé (10) est découpé en fin de ligne de fabrication pour son stockage et/ou l'assemblage en élément de menuiserie.

20. Dispositif de mise en oeuvre du procédé selon l'une quelconque des revendications 11 à 19, **caractérise en ce qu'il comprend :**

    - des moyens (130,50) pour rassembler de manière parallèle des fils continus à base de fibres de verre continues et d'une première matière thermoplastique, et des moyens (70,80), notamment de chauffage (70), pour former au moins un ruban consolidé (13) dans lequel les fibres de verre sont imprégnées de la première matière thermoplastique, les fils continus à base de fibres de verre continues et d'une première matière thermoplastique étant co-mêlés entre-eux,
    - une filière (200) calibrée à la section du profilé (10) et des moyens ( ,300) pour introduire simultanément au moins un ruban (14) et au moins une deuxième matière organique extrudable (30) fondue dans ladite filière (200) au contact du

ou des rubans, de manière à obtenir un profilé constitué d'au moins une deuxième matière organique extrudable renforcée par au moins un ruban.

21. Dispositif selon la revendication 20 **caractérisé en ce qu'**il comprend :

- des moyens (130) pour entraîner et des moyens (50) pour rassembler sous forme d'au moins une nappe (12) les fils continus (11) constitués de filaments de renforcement et d'une première matière thermoplastique ;
- des moyens (70) pour chauffer au moins une nappe (12) à une température atteignant au moins celle de fusion de la première matière thermoplastique mais pas celle de ramollissement des filaments de renforcement;
- un dispositif d'imprégnation (80) d'au moins une nappe chauffée de manière à répartir de manière homogène la première matière thermoplastique fondue et permettre l'imprégnation des filaments de renforcement par celle-ci.

22. Dispositif selon la revendication 20 ou 21, **caractérisé en ce que** les moyens de rassemblement (50) consistent en un peigne dont les dents (51) permettent un alignement parallèle des fils (11) selon des espaces réguliers.

23. Dispositif selon l'une des revendications 20 à 22, **caractérisé en ce que** le dispositif d'imprégnation (80) comporte trois cylindres (81) chauffants et tournants qui sont disposés en triangle et entre lesquels défile la nappe (12), la hauteur de séparation des cylindres étant adaptée pour établir une pression appropriée sur la surface de la nappe.

24. Dispositif selon la revendication 23, **caractérisé en ce que** chaque cylindre (81) comporte une lame (82) pour racler la matière thermoplastique fondue déposée sur le cylindre après passage de la nappe.

25. Dispositif selon l'une quelconque des revendications 20 à 24, **caractérisé en ce qu'**il comprend un premier dispositif de conformation (100) d'au moins une nappe (12) de manière à la transformer en au moins un ruban (13).

26. Dispositif selon la revendication 25, **caractérisé en ce que** le premier dispositif de conformation (100) comporte une fillère de préférence chauffante

27. Dispositif selon l'une quelconque des revendications 20 à 26 **caractérisé en ce que** la filière (200) calibrée à la section du profilé (10) comprend des moyens (214,215) pour apporter la seconde matière extrudable fondue au contact du ruban (13) en appliquant une surpression (P).

28. Dispositif selon l'une quelconque des revendications 20 à 27 **caractérisé en ce que** une extrudeuse (300) apporte la seconde matière extrudable fondue (30) dans la filière (200) calibrée à la section du profilé (10).

29. Dispositif selon l'une quelconque des revendications 20 à 28 **caractérisé en ce qu'**il comprend un dispositif de refroidissement comprenant au moins un moyen choisi parmi une calandre de refroidissement (110), une filière froide et des moyens de pulvérisation de liquide.

**Patentansprüche**

1. Bauelement, das mindestens ein extrudiertes Profil (400) aus einem extrudierbaren zweiten organischen Material, das von wenigstens einem Verstärkungsband (401) verstärkt wird, das aus endlosen Glasfilamenten und einem thermoplastischen ersten organischen Material besteht, umfasst, **dadurch gekennzeichnet, dass** das Band (401) aus endlosen Fäden (11) auf der Basis von endlosen Filamenten aus Glas und aus dem thermoplastischen ersten organischen Material, die zueinander im Wesentlichen parallel liegen, gebildet worden ist, wobei das erste organische Material auf der Basis von einem Polyester, insbesondere Polyethylen- bzw. Polybutylenterephthalat, ist und die Filamente miteinander vermischt sind.

2. Bauelement nach Anspruch 1, **dadurch gekennzeichnet, dass** das Band (401) aus Glasfilamenten besteht, die innig mit dem thermoplastischen ersten organischen Material der endlosen Filamente aus dem thermoplastischen ersten organischen Material imprägniert sind.

3. Bauelement nach einem der vorhergehenden Ansprüche, **dadurch gekennzeichnet, dass** das extrudierte extrudierbare zweite organische Material Polyvinylchlorid ist.

4. Bauelement nach einem der vorhergehenden Ansprüche, **dadurch gekennzeichnet, dass** wenigstens ein Teil der Oberfläche des Profils aus einem gefärbten extrudierbaren organischen Material besteht.

5. Bauelement nach einem der vorhergehenden Ansprüche, **dadurch gekennzeichnet, dass** das Profil (400) mindestens eine Kammer (404) und mindestens eine von wenigstens einem Band (401) verstärkte Wand (402) umfasst.

6. Bauelement nach einem der Ansprüche 1 bis 4, **dadurch gekennzeichnet, dass** das Profil (400) voll ist.

7. Bauelement nach einem der vorhergehenden Ansprüche, **dadurch gekennzeichnet, dass** der Querschnitt des Bandes (401) im Wesentlichen die Form eines langen Rechtecks hat.

8. Bauelement nach einem der Ansprüche 1 bis 6, **dadurch gekennzeichnet, dass** der Querschnitt des Bandes (401) eine komplexe Form, insbesondere eine L-, T-, U-, I- und Zickzackform hat.

9. Bauelement nach Anspruch 8, **dadurch gekennzeichnet, dass** mehrere Wände (402) von mindestens ein und demselben Band (401) verstärkt werden.

10. Rahmenbauelement, insbesondere von einem Fensterrahmen und/oder Fensterflügel und/oder Rollladen und/oder einer Tür und/oder einem Tor, das ein Bauelement nach einem der vorhergehenden Ansprüche umfasst.

11. Verfahren zur Herstellung eines Bauelements nach einem der Ansprüche 1 bis 10, **dadurch gekennzeichnet, dass** es wenigstens folgende Stufen, die ununterbrochen nacheinander durchgeführt werden, umfasst:

    - paralleles Vereinigen der endlosen Fäden (11) auf der Basis von endlosen Filamenten aus Glas und aus einem thermoplastischen ersten Material und ihre Formgebung, indem mindestens ein verfestigtes Band (13) erwärmt wird, in welchem die Glasfasern mit dem thermoplastischen ersten Material imprägniert sind, und
    - Einführen wenigstens eines Bandes (13) in eine auf den Querschnitt des Profils eingestellte Spinndüse (200) und zeitgleiches Einführen mindestens eines geschmolzenen extrudierbaren zweiten organischen Materials (30) in die Spinndüse (200) in Berührung mit dem/den Band/Bändern derart, dass ein Profil (10) erhalten wird, das aus mindestens einem extrudierbaren zweiten organischen Material, das von mindestens einem Band verstärkt wird, besteht.

12. Verfahren nach Anspruch 11, **dadurch gekennzeichnet, dass** das Band (13) aus endlosen Fäden (11) gebildet wird, die Glasfäden und organische Fasern aus dem thermoplastischen ersten Material umfassen.

13. Verfahren nach Anspruch 11 oder 12, **dadurch ge-**

**kennzeichnet, dass** die Fäden (11), die vereinigt werden, aus endlosen Glasfilamenten und endlosen Filamenten aus dem thermoplastischen ersten Material, die miteinander vermischt werden, bestehen.

14. Verfahren nach einem der Ansprüche 11 bis 13, **dadurch gekennzeichnet, dass** es folgende Stufen umfasst:

    - Bewegen und paralleles Vereinigen der Fäden (11) auf der Basis von einem thermoplastischen ersten Material und Glasfasern zur Form von mindestens einer Bahn (12),
    - Schicken von mindestens einer Bahn (12) in einen Bereich, in welchem sie auf eine Temperatur erwärmt wird, die mindestens die Schmelztemperatur des thermoplastischen ersten Materials erreicht, ohne dabei die Erweichungstemperatur der Verstärkungsfasern zu erreichen, und
    - Schicken von mindestens einer Bahn (12) durch eine Imprägniereinrichtung (80), wobei ihre Temperatur auf einer Formgebungstemperatur des thermoplastischen ersten Materials gehalten wird, um das geschmolzene thermoplastische erste Material homogen zu verteilen und die Glasfasern mit ihm zu imprägnieren.

15. Verfahren nach einem der Ansprüche 11 bis 14, **dadurch gekennzeichnet, dass** mindestens eine Bahn (12) in eine erste Formgebungseinrichtung (100) geschickt wird, wobei ihre Temperatur auf der Formgebungstemperatur des thermoplastischen ersten Materials derart gehalten wird, dass mindestens ein Band (13) erhalten wird, das aus der Aneinanderanordnung der Fäden (11) besteht, die in Querrichtung eine Kontinuität bilden.

16. Verfahren nach einem der Ansprüche 11 bis 15, **dadurch gekennzeichnet, dass** es darin besteht, von Spulen einen endlosen Faden aus Filamenten aus Glas und aus dem thermoplastischen ersten Material abzuwickeln und während der Vereinigung der Fäden zur Form einer Bahn die Spannung der Fäden zu regulieren.

17. Verfahren nach einem der Ansprüche 11 bis 16, **dadurch gekennzeichnet, dass** die Fäden (11) vor dem Einführen der Bahn (12) in die Erwärmungszone von jeder statischen Elektrizität befreit werden.

18. Verfahren nach einem der vorhergehenden Ansprüche, **dadurch gekennzeichnet, dass** das Profil (14) nach der Spinndüse (200) abgekühlt wird, um seine Formeigenschaften und sein Aussehen zu fixieren und so das fertige Profil (10) liefern zu können.

19. Verfahren nach einem der vorhergehenden Ansprüche, **dadurch gekennzeichnet, dass** das Profil (10) am Ende der Produktionslinie zugeschnitten wird, um es zu lagern und/oder zu einem Bauelement zusammenzubauen.

20. Vorrichtung zur Durchführung des Verfahrens nach einem der Ansprüche 11 bis 19, **dadurch gekennzeichnet, dass** sie umfasst:

- Mittel (130, 50), um endlose Fäden auf der Basis von endlosen Filamenten aus Glas und aus einem thermoplastischen ersten Material parallel zu vereinigen, und Mittel (70, 80), insbesondere Erwärmungsmittel (70), um mindestens ein verfestigtes Band (13) zu bilden, in welchem die Glasfilamente mit dem thermoplastischen ersten Material imprägniert sind, wobei die endlosen Fäden auf der Basis von endlosen Filamenten aus Glas und aus einem thermoplastischen ersten Material miteinander vermischt werden, und

- eine Spinndüse (200), die auf den Querschnitt des Profils (10) eingestellt ist, und Mittel (300), um zeitgleich mindestens ein Band (14) und mindestens ein geschmolzenes extrudierbares zweites organisches Material (30) in die Spinndüse (200) in Berührung mit dem/den Band/Bändern derart einzuführen, dass ein Profil erhalten wird, das aus mindestens einem extrudierbaren zweiten organischen Material, das von mindestens einem Band verstärkt wird, besteht.

21. Vorrichtung nach Anspruch 20, **dadurch gekennzeichnet, dass** sie umfasst:

- Mittel (130) zum Bewegen und Mittel (50) zum Vereinigen der endlosen Fäden (11), die aus verstärkenden und Filamenten aus einem thermoplastischen ersten Material bestehen, zur Form von mindestens einer Bahn (12),
- Mittel (70), um mindestens eine Bahn (12) auf eine Temperatur zu erwärmen, die mindestens die Schmelztemperatur des thermoplastischen ersten Materials, aber nicht die Erweichungstemperatur der Verstärkungsfilamente erreicht, und
- eine Einrichtung (80) zum Imprägnieren von mindestens einer Bahn, die derart erwärmt worden ist, dass das geschmolzene thermoplastische erste Material homogen verteilt ist und die Imprägnierung der Verstärkungsfilamente mit ihm erlaubt.

22. Vorrichtung nach Anspruch 20 oder 21, **dadurch gekennzeichnet, dass** die Vereinigungsmittel (50) aus einem Kamm bestehen, dessen Zinken (51) eine parallele Ausrichtung der Fäden (11) in regelmäßigen Abständen erlauben.

23. Vorrichtung nach einem der Ansprüche 20 bis 22, **dadurch gekennzeichnet, dass** die Imprägniereinrichtung (80) drei Zylinder (81) umfasst, die beheizt werden, sich drehen und in einem Dreieck angeordnet sind und zwischen welchen die Bahn (12) durchläuft, wobei die Höhe, welche die Zylinder voneinander trennt, eingestellt wird, um auf die Oberfläche der Bahn einen geeigneten Druck auszuüben.

24. Vorrichtung nach Anspruch 23, **dadurch gekennzeichnet, dass** jeder Zylinder (81) eine Klinge (82) umfasst, um das nach dem Durchgang der Bahn auf dem Zylinder abgelagerte geschmolzene thermoplastische Material abzustreifen.

25. Vorrichtung nach einem der Ansprüche 20 bis 24, **dadurch gekennzeichnet, dass** sie eine erste Einrichtung (100) zur Bildung mindestens einer Bahn (12) derart umfasst, dass diese in mindestens ein Band (13) umgewandelt wird.

26. Vorrichtung nach Anspruch 25, **dadurch gekennzeichnet, dass** die erste Formgebungseinrichtung (100) eine vorzugsweise beheizte Spinndüse umfasst.

27. Vorrichtung nach einem der Ansprüche 20 bis 26, **dadurch gekennzeichnet, dass** die auf den Querschnitt des Profils (10) eingestellte Spinndüse (200) Mittel (214, 215) zum InBerührung-Bringen des geschmolzenen extrudierbaren zweiten Materials mit dem Band (13), indem ein Überdruck (P) ausgeübt wird, umfasst.

28. Vorrichtung nach einem der Ansprüche 20 bis 27, **dadurch gekennzeichnet, dass** das geschmolzene extrudierbare zweite Material (30) von einem Extruder (300) in die auf den Querschnitt des Profils (10) eingestellte Spinndüse (200) gebracht wird.

29. Vorrichtung nach einem der Ansprüche 20 bis 28, **dadurch gekennzeichnet, dass** sie eine Kühleinrichtung enthält, die mindestens ein Mittel umfasst, das aus einem Kühlkalander (110) einer gekühlten Spinndüse und Mitteln zum Aufsprühen einer Flüssigkeit ausgewählt ist.

**Claims**

1. Joinery element comprising at least one extruded profile (400) made of a second extrudable organic material reinforced by at least one reinforcing tape (401) formed by continuous glass filaments and by a first organic thermoplastic material, **characterized in that** the tape (401) is formed from continuous yarns (11) based on continuous glass filaments and on the first thermoplastic organic material, these being substantially parallel to one another, the said first organic material being based on a polyester, especially polyethylene terephthalate or polybutylene terephthalate, and the filaments being mutually comingled.

2. Joinery element according to Claim 1, **characterized in that** the tape (401) consists of glass filaments intimately impregnated by the first thermoplastic organic material of said continuous filaments of said first thermoplastic organic material.

3. Joinery element according to either of the preceding claims, **characterized in that** the second extruded extrudable organic material is polyvinyl chloride.

4. Joinery element according to any one of the preceding claims, **characterized in that** at least part of the surface of the profile is a coloured extrudable organic material.

5. Joinery element according to any one of the preceding claims, **characterized in that** the profile (400) includes at least one chamber (404) and at least one wall (402) reinforced by at least one tape (401).

6. Joinery element according to one of Claims 1 to 4, **characterized in that** the profile (400) is a solid profile.

7. Joinery element according to any one of the preceding claims, **characterized in that** the cross section of the tape (401) is substantially of elongate rectangular shape.

8. Joinery element according to one of Claims 1 to 6, **characterized in that** the cross section of the tape (401) has a complex shape, especially an L, a T, a U, an I or a chevron.

9. Joinery element according to Claim 8, **characterized in that** several walls (402) are reinforced by at least the same tape (401).

10. Joinery framework element, especially a fixed and/or opening window frame and/or a shutter and/or a door and/or a gate comprising a joinery element according to any one of the preceding claims.

11. Process for manufacturing a joinery element according to any one of Claims 1 to 10, **characterized in that** it comprises at least the following steps, performed in a continuous sequence:

   - continuous yarns (11) based on continuous glass fibres and on a first thermoplastic are brought together so as to be parallel and at least one consolidated tape (13) is formed by heating them, in which tape the glass fibres are impregnated with the first thermoplastic; and
   - at least one tape (13) is introduced into a die (200) sized to the cross section of the profile and at least one second molten extrudable organic material (30) is simultaneously introduced into said die (200) in contact with the tape or tapes, so as to obtain a profile (10) consisting of at least one second extrudable organic material reinforced by at least one tape.

12. Process according to Claim 11, **characterized in that** the tape (13) is formed from continuous yarns (11) comprising glass yarns and organic fibres of said first thermoplastic.

13. Process according to Claim 11 or 12, **characterized in that** the yarns (11) which are brought together consist of continuous glass filaments and continuous filaments of the first thermoplastic which are comingled together.

14. Process according to any one of Claims 11 to 13, **characterized in that** it comprises the following steps:

   - yarns (11) based on a first thermoplastic and on glass fibres are driven and brought together in a parallel manner in the form of at least one sheet (12);
   - at least one sheet (12) is made to enter a zone in which it is heated to a temperature reaching at least the melting point of the first thermoplastic without reaching the softening temperature of the reinforcing fibres; and
   - at least one sheet (12) is made to pass through an impregnation device (80), while maintaining its temperature at a temperature at which the first thermoplastic is malleable, in order to distribute the first molten thermoplastic uniformly and to impregnate the glass fibres therewith.

15. Process according to any one of Claims 11 to 14, **characterized in that** at least one sheet (12) is introduced into a first shaping device (100), while maintaining its temperature at a temperature at which the first thermoplastic is malleable, so as to obtain at least one tape (13) formed by bringing the yarns (11) together so as to be touching, thereby creating transverse continuity.

16. Process according to any one of Claims 11 to 15, **characterized in that** it consists in unreeling, from wound packages, a continuous yarn of glass filaments and filaments of the first thermoplastic and, while the yarns are being brought together in the form of a sheet, in regulating the tension in the yarns.

17. Process according to any one of Claims 11 to 16, **characterized in that** the yarns (11) are stripped of any static electricity before the sheet (12) passes into the heating zone.

18. Process according to any one of the preceding claims, **characterized in that** the profile (14) on leaving the die (200) is cooled in order to fix its dimensional features and its appearance in order to deliver said final profile (10).

19. Process according to any one of the preceding claims, **characterized in that** the profile (10) is cut up at the end of the manufacturing line in order to be stored and/or assembled into a joinery element.

20. Plant for implementing the process according to any one of Claims 11 to 19, **characterized in that** it comprises:

- means (130, 50) for bringing together in a parallel manner continuous yarns based on continuous glass fibres and on a first thermoplastic, and means .(70, 80), especially heating means (70), for forming at least one consolidated tape (13) in which the glass fibres are impregnated with the first thermoplastic the continuous yarns based on continuous glass fibres and on a first thermoplastic material being mutually comingled; and
- a die (200) sized to the cross section of the profile (10) and means (300) for simultaneously introducing at least one tape (14) and at least one second molten extrudable organic material (30) into said die (200) in contact with the tape or tapes, so as to obtain a profile consisting of at least one second extrudable organic material reinforced with at least one tape.

21. Plant according to Claim 20, **characterized in that** it comprises:

means (130) for driving and means (50) for bringing together into the form of at least one sheet (12) the continuous yarns (11) consisting of reinforcing filaments and of a first thermoplastic;
- means (70) for heating at least one sheet (12) to a temperature reaching at least that of the melting point of the thermoplastic, but not the softening temperature of the reinforcing filaments;
- a device (80) for impregnating at least one heated sheet so as to distribute the first molten thermoplastic uniformly and allow the reinforcing filaments to be impregnated therewith.

22. Plant according to either of Claims 20 and 21, **characterized in that** the means (50) for bringing the yarns together consist of a comb, the tines (51) of which produce a uniformly-spaced parallel alignment of the yarns (11).

23. Plant according to one of Claims 20 to 22, **characterized in that** the impregnation device (80) comprises three heated rotating rolls (81) which are arranged in a triangle and between which the sheet (12) runs, the roll separation height being adapted in order to apply suitable pressure to the surface of the sheet.

24. Plant according to Claim 23, **characterized in that** each roll (81) has a blade (82) for scraping off the molten thermoplastic deposited on the roll after the sheet has passed.

25. Plant according to any one of Claims 20 to 24, **characterized in that** it comprises a first device (100) for shaping at least one sheet (12) so as to convert it into at least one tape (13).

26. Plant according to Claim 25, **characterized in that** the first shaping device (100) comprises a die, which is preferably heated.

27. Plant according to any one of Claims 20 to 26, **characterized in that** the die (200) sized to the cross section of the profile (10) includes means (214, 215) for bringing the second molten extrudable into contact with the tape (13) by applying an overpressure (P).

28. Plant according to any one of Claims 20 to 27, **characterized in that** an extruder (300) delivers the second molten extrudable (30) into the die (200) sized to the cross section of the profile (10).

29. Plant according to any one of Claims 20 to 28, **characterized in that** it includes a cooling device comprising at least one means chosen from a cooling calender (110), a cold die and liquid-spraying means.

FIG.1

FIG.2

FIG.3

FIG.4A

FIG.4B

FIG.5

FIG.6

212

214

220    216

218

14    204
      203
      219    221
             217
             215

211

F2

30

213

300

13

F1

201

202

200

Module
d'élasticité
en flexion

FIG.7

20.0  30.0  40.0  50.0  60.0  70.0  80.0  90.0  100.0  110.0  120.0  130.0

Temp. (°C)

FIG.8